# EUROPEAN PATENT SPECIFICATION

(11) **EP 2 736 734 B1**
(45) Date of publication and mention of the grant of the patent: **20.03.2019**
(21) Application number: 12748762.7
(22) Date of filing: 20.07.2012
(51) Int. Cl.: B60C 11/03, B60C 11/04, B60C 9/20

(54) **TYRE FOR VEHICLE WHEELS**
REIFEN FÜR FAHRZEUGRÄDER
PNEUMATIQUE POUR ROUES DE VÉHICULE

(30) Priority: 28.07.2011 IT MI20111419; 27.09.2011 US 201161539773 P
(43) Date of publication of application: 04.06.2014
(73) Proprietor: Pirelli Tyre S.p.A., 20126 Milano (IT)
(72) Inventor: PIROVANO, Riccardo, 20126 Milano (IT); ASCANELLI, Alessandro, 20126 Milano (IT)
(74) Representative: Fabiano, Piero
(86) International application number: PCT/IB2012/001423
(87) International publication number: WO 2013/014517

(56) References cited:
- WO-A1-97/46400
- WO-A1-2010/133940
- US-A- 2 850 066
- US-A- 5 833 780
- US-A- 6 142 200
- US-A1- 2009 090 445

## Description

### FIELD OF THE INVENTION

The present invention relates to a tyre for vehicle wheels. In particular, the invention relates to a tyre for heavy load vehicle wheels.

### PRIOR ART

In the technical field of tyres, documents EP1782970 and EP2072286 refer to tyres for vehicle wheels. US5833780 A shows a tyre according to the preamble of claim 1.

### SUMMARY OF THE INVENTION

The general trend to reduce the energy consumption of products reflects on tyres through the contribution that they can give, for example, in terms of a reduction in fuel consumption.

The hysteresis losses caused by the cyclic deformations to which the tyre is subjected while rolling and largely due to energy dissipated by the tyre, deriving from the viscoelastic materials included in the tyre, are indicated as Rolling Resistance (in this respect it is mentioned, for example, the publication of the National Highway Traffic Safety Administration: The Pneumatic Tire ed. 2005, chapter 12, pages 476-480).
The Applicant has focused his attention on the problem of reducing the rolling resistance in those tyres which mainly can contribute to reducing fuel consumption and has indentified the tyres for heavy load vehicles, and particularly the steer axle and trailer tyres, as the tyre classes which can be subjected to an advantageous reduction in the rolling resistance.
The Applicant has in fact observed that the effect of a reduction in the rolling resistance appears to be more pronounced in the aforesaid tyre classes than in drive axle tyres. In fact, the steer axle and trailer tyres have a tread pattern typically comprising at least four annular regions of substantially solid rubber separated from one another by at least three circumferential grooves, whereas the drive axle tyres have treads in which circumferential grooves are connected to substantially transverse or axial grooves so as to define more mobile and deformable blocks for ensuring traction.

Moreover, a reduction in the rolling resistance focused on the steering axle and/or trailer tyres multiplies the energy saving effects also proportionally to the number of such tyres present in a heavy load vehicle. As an example, it is mentioned a vehicle unit formed by a tractor and a trailer, in which there are typically two steering axle tyres, four drive axle tyres and six trailer tyres, thus eight tyres out of twelve tyres in all.

Keeping the contribution deriving from the hysteresis losses related to the kind of elastomeric material and the contribution due to the tyre structure apart, the Applicant has observed that by acting on the tread pattern and particularly on the groove geometry of a heavy load vehicle tyre, it is possible to effectively reduce the rolling resistance of the tyre.

This assumption has been confirmed by comparative tests performed by means of finite elements computer simulations and by tests carried out on heavy load vehicle tyres, through which the Applicant has been able to show a noticeable reduction in the rolling resistance.

The Applicant has found that a reduction in the rolling resistance is achieved by making a heavy load vehicle tyre with a tread having at least one circumferential groove comprising a radially outer portion having axially a wider cross section and a radially inner portion having a cross section suitable to allow mutual contact between the opposite walls of said lower portion of the circumferential groove in the footprint area.
This outcome is unexpected, since a reduced cross section width of the radially inner portion of the at least one circumferential groove formed in the tread of a tyre causes both an increase in the total weight of the tyre and a greater amount of "rubber to the ground", thus a greater mass of elastomeric material, which should contribute to the increase of energy dissipation while the tyre is in use, thus causing an increase in the rolling resistance.

The invention relates to a tyre for heavy load vehicle wheels according to claim 1.

By "depth" of a groove or of a portion thereof it is meant the extension of the groove or of the groove portion measured in a direction substantially perpendicular to the tread surface at the groove.

By "equatorial plane" of the tyre it is meant the plane perpendicular to the rotation axis of the tyre and containing its centre line.

By "circumferential groove" it is meant a groove developing along the rotation direction of the tyre, with a straight course, a curvilinear course or a course comprising alternating segments (zigzagging).

By "axial" direction or "axially" it is meant a direction parallel to, or in any case only slightly inclined with respect to the rotation axis of the tyre.

By "radial" direction or "radially" it is meant a direction substantially orthogonal to the rotation axis of the tyre.

By "width" of a groove it is meant the distance in the axial direction between the groove walls measured at the edge of the tread surface or at a predetermined depth.

Preferably, the ratio between total cross section and radial depth of the at least one between the first and the second circumferential grooves has a numerical value between about 0,6 and about 3.

Preferably, the central annular portion can comprise two second circumferential grooves symmetrically located on opposite sides of the equatorial plane.

Preferably, the tyre can be made for low, medium or high severity of use on roads and highways (for example regional and long-haul type).

Preferably, the tyre is fitted on rims with fitting diameter equal to or greater than 17,5 inches, even more preferably between 17,5 and 22,5 inches.

Preferably, such tyres have a cross-sectional width starting from 205 mm, preferably between 315 mm and 445 mm.
Preferably, such tyres have two second grooves in the central annular portion formed on opposite sides with respect to the equatorial plane.

The Applicant has in fact observed that the convex profile of the central annular portion of the tread advantageously provides for water removal when entering in the footprint area and the central portion of the tread is basically subjected to a greater pressure compared to the shoulder portions, thus in such central portion the constraint effect provided by the opposite groove walls when they contact each other is better exploited.

The tyre of the invention has an excellent running behaviour, both on dry and on wet road surfaces, during its entire service life.
Moreover, the tyre of the invention also has features of low rolling resistance, which make the same particularly suitable to be fitted on wheels of heavy load vehicles for long-haul applications on highways or state roads.

Further features and advantages of the invention shall now be described with reference to embodiments shown, as a non-limiting example, in the accompanying figures, wherein:

### BRIEF DESCRIPTION OF THE DRAWINGS

- Figure 1 is a schematic cross-sectional view of a tyre according to an embodiment of the present invention;
- Figure 2 is a schematic plan view of a tread portion of the tyre of Figure 1;
- Figures 3a and 3c show, in a schematic cross-sectional view, as many embodiments of tread grooves of tyres according to embodiments of the present invention;
- Figure 3b shows a tread groove not according to the invention;
- Figures 4a, 4b, 4c show, in a schematic partial plan view, three embodiments of tread grooves of tyres according to embodiments of the present invention;
- Figure 5 is a schematic view of the belt structure of the tyre of Figure 1;
- Figures 6 and 7 are schematic views of belt structures particularly suitable for tyres having large chords (so-called "wide base"), according to two embodiments of the invention.

### DETAILED DESCRIPTION OF EMBODIMENTS OF THE INVENTION

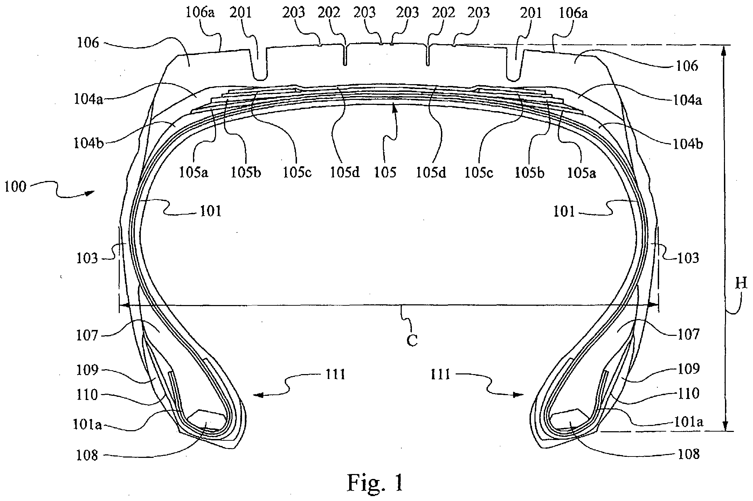

In Figure 1 a tyre for vehicle wheels according to the present invention, in particular a tyre intended to be fitted on the steer axle wheels of a heavy load vehicle or on the wheels of a trailer, typically subjected to a heavy load, is generally indicated at 100.

In the figures, the same reference numerals indicate the same or functionally equivalent elements.

Figure 1 shows a cross-sectional view of a tyre 100 according to an embodiment of the present invention.

The tyre of Figure 1 is a tyre for wheels of heavy load vehicles, such as trucks, busses, trailers, vans, and generally vehicles in which the tyre is subjected to a high load. Preferably, such a tyre is adapted to be fitted on rims with a diameter equal to or greater than 17,5 inches for steer axle or trailer wheels. A heavy load vehicle is for example a vehicle belonging to the classes M2, M3, N2, N3, O2, O3 and O4 according to the "ECE Consolidated Resolution of the Construction of vehicles (R.E.3), Annex 7, Classification and definition of power-driven vehicles and trailers", or to the classes M3, N2, N3, O3, O4 according to the "ETRTO Engineering design information" (ed. 2010), section "General information", pages G15 and G16, chapter "International codes for wheeled vehicle classification as UN/ECE 29/78 and Directive 2003/37". The heavy load vehicle class comprises trucks, tractor-trailers, lorries, busses, and similar vehicles.

The tyre 100 comprises at least one carcass ply 101, whose opposite lateral edges are associated with respective bead structures 111 comprising a bead ring 108 and at least one bead filling 107. The association between said at least one carcass ply 101 and said bead structure 111 is typically obtained by turning up the opposite lateral edges of said at least one carcass ply 101 about said bead ring 108 and said at least one bead filling 107, so as to form a carcass turn-up 101a. An edge 110 and an anti-abrasive strip 109 can be conventionally arranged in the region of the bead 111.

The at least one carcass ply 101 commonly comprises a plurality of carcass ply reinforcing elements arranged substantially parallel to one another and at least partially coated with a layer of elastomeric material. These carcass ply reinforcing elements, particularly in the case of truck tyres, usually comprise metal cords, preferably made of steel.

The at least one carcass ply 101 is usually of the radial type, i.e. it incorporates reinforcing elements arranged according to a direction substantially perpendicular to the circumferential direction.

A belt structure 105 is applied in a radially outer position with respect to said at least one carcass ply 101. The belt structure 105 is described in greater detail in the remainder of this description.

The belt structure comprises at least two radially superimposed main belt layers incorporating a plurality of belt reinforcing elements, typically metal cords, preferably made of steel. The belt structure can also comprise a zero-degree reinforcing layer applied, for example, in a radially outer position with respect to the second main belt layer.

The metal cords employed in the layers of the belt structure 105, and particularly those employed in the main belt layers, comprise a plurality of filaments.

The filaments of the metal cords employed in the belt structure 105 (and typically also in other reinforcing layers of the tyre 100) are preferably filaments made of NT (normal tensile), HT (high tensile), SHT (super high tensile) or UHT (ultra high tensile) steel. Typically, such steel filaments have a carbon content lower than about 1%. Preferably, the carbon content is greater than or equal to about 0,7%. The filaments are typically coated with brass or another corrosion-resistant material (for example Zn/Mn).

A tread band 106 is circumferentially applied in a radially outer position with respect to said belt structure 105. The tread band 106 has on its outer side a rolling surface 106a suitable to contact the ground.

Circumferential grooves 201, 202, which can be connected with each other by means of transverse notches (not shown), define a tread pattern comprising a plurality of ribs and/or blocks with different shapes and dimensions, distributed on the rolling surface 106a.

Further notches 203, having a depth not greater than 1-2 mm, arranged circumferentially, transversely or according to directions variously inclined with respect to the equatorial plane, can possibly be present in the tread.

A sidewall 103 is externally applied on the carcass ply 101. The sidewall 103 extends, in an axially outer position, from the bead structure 111 to the tread band 106.

In the embodiment shown in Figure 1 an underlayer 104a is located in the area where the lateral edges of the tread band 106 join the sidewall 103. The underlayer can also extend over the entire axial width of the crown portion of the tyre 100, and not be limited to just the lateral edge portion. An underbelt insert 104b can be arranged for supporting the axial ends of the belt structure 105.

An elastomeric layer, generally known as liner, which provides the necessary tightness to the air with which the tyre is inflated, can be provided in a radially inner position with respect to the carcass ply 101.

Preferably, the tyre 100 according to the present invention has an aspect ratio (H/C) smaller than 0,85, more preferably between 0,40 and 0,80.

Said aspect ratio is the ratio between the height H of the cross section of the tyre, i.e. the radial distance from the nominal diameter of the rim to the outer diameter of the tyre in the equatorial plane thereof, and the width C of the cross section of the tyre, i.e. the maximum linear distance parallel to the rotation axis of the tyre between the outer surfaces of the sidewalls (according to E.T.R.T.O ed. 2010, pages G3 and G4).

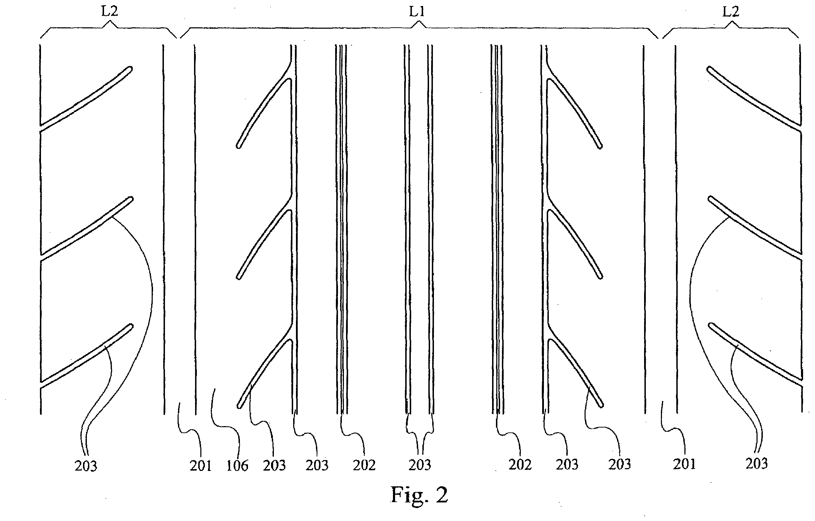

Referring to Figures 1 and 2, the tread band 106 comprises a central portion L1 and two shoulder portions L2.

The central portion L1, located astride the equatorial plane X-X, is visually separated from the shoulder portions L2 by two first circumferential grooves 201.

In the embodiment shown in Figures 1 and 2, the first circumferential grooves 201 are formed wider than the second circumferential grooves 202, however it is understood that the groove geometry can be reversed and the tyre can have, for example, two wider second circumferential grooves 202 in the central annular portion L1 and two first circumferential grooves 201, adapted to separate the two shoulder portions L2 from the central portion L1, formed with a lesser width.

The first circumferential grooves 201 or alternatively the second circumferential grooves 202 can have a cross section with a maximum width greater than 3 mm. Preferably, they have a maximum width greater than 5 mm, in any case smaller than 20 mm, preferably smaller than 18 mm.

Advantageously, the first and/or the second circumferential grooves 201, 202 can have a depth greater than 8 mm, preferably greater than 12 mm, in any case not greater than 25 mm.
For example, in the embodiment shown in Figure 1, the first circumferential grooves 201 are tapered in the radial direction towards the inside, with a rounded groove bottom. Preferably, the maximum width coincides with the width of the groove edge at the tread surface.
In the central portion L1 the tread band has at least one second circumferential groove 202 located astride the equatorial plane X-X.
Referring to Figures 1 and 2, in the embodiment of the tyre shown, there are two second circumferential grooves 202 in the central annular portion, symmetrically located with respect to the equatorial plane.

Preferably, said at least one of the first and the second circumferential grooves 201, 202 is formed so that A₁ ≥ 0,6A.

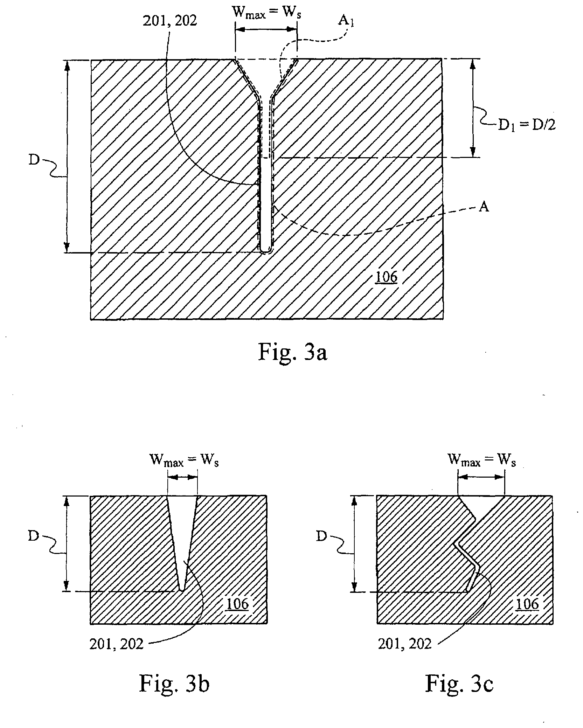

In Figure 3a a circumferential groove according to a preferred embodiment of the invention is shown. The groove can be either a first circumferential groove 201 or a second circumferential groove 202. The groove has its radially innermost portion with substantially parallel walls joined to a radially outermost portion with walls diverging in the radial direction towards the tread surface.
Preferably, said at least one of the first and the second circumferential grooves 201, 202 can have in the radially outer portion a cross section having a maximum width Wmax and a width Ws of the groove edge at the tread surface, with Ws not smaller than 80% of Wmax.

Providing a radially outer portion of a circumferential groove with a cross section wider than that of the radially inner portion advantageously makes draining water possibly present on the road surface easier.

In Figure 3b a tread is shown in which at least one of the first and the second circumferential grooves, preferably said second circumferential grooves 202, has walls diverging in the radial outer direction from the groove bottom towards the tread surface.
In Figure 3c a groove is shown having a zigzag radial course in the radially inner portion and walls diverging towards the tread surface in the radially outer portion. Advantageously, this embodiment of the radially inner portion of the groove provides a further constraint to the movement in radial direction of the tread rubber portions separated by the groove when the tyre is in use.
The circumferential grooves 201, 202 shown in the three Figures 3a, 3b, 3c have their radially outer portion tapered so as to have a width reduction in the radial direction towards the inside of the tread. In such cases, the width Ws at the radially outer surface edge of the groove coincides with the maximum width Wmax of the groove, Ws = Wmax.

In an embodiment (not shown), the radially outer portion of the circumferential grooves can have a width Ws at the radially outer surface edge of the groove smaller than its maximum width Wmax.

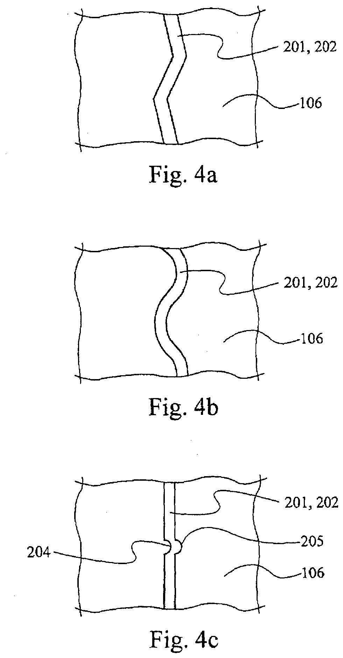

Beside a straight circumferential course, the first circumferential grooves 201 and/or the at least one second circumferential groove 202 can have a zigzag circumferential course comprising a plurality of first inclined segments alternated with a plurality of second segments counter-inclined with respect to the first inclined segments, as shown in Figure 4a.
In an embodiment, the first circumferential grooves 201 and/or the at least one second circumferential groove 202 can have a curvilinear course, for example a sinusoidal course, as shown in Figure 4b.
In an embodiment shown in figure 4c, the first circumferential grooves 201 and/or the at least one second circumferential groove 202 can have a plurality of projections 204 adapted to engage in corresponding recesses 205.
Such grooves having staggered circumferential courses or courses with engagement elements allow the groove to be constrained, limiting or preventing the mutual sliding in the circumferential direction of the groove walls when they contact each other in the footprint area.

Preferably, said at least one of the first and the second circumferential grooves 201, 202 with the aforesaid geometry can have, in the radially inner portion near the groove bottom, a cross section having a width greater than or equal to 0,5 mm, preferably greater than 1 mm. Preferably, said at least one of the first and the second circumferential grooves 201, 202 near the groove bottom can have a cross section having a width smaller than 8 mm.
In the preferred embodiment, the two second circumferential grooves 202 have a depth and a cross section with the aforesaid geometry.
This embodiment is preferred because the Applicant has observed that the central annular portion of the tread can achieve a more effective reduction in the rolling resistance thanks to the lower mobility of this portion compared to that of the shoulder annular portions. In such central portion the constraint provided by the contact between the walls of the radially inner portion of the groove, which are nearer to each other when the groove is in the footprint area, appears to be exploited to a greater extent.
Preferably, in the footprint the tyre has a ratio between the area of solid rubber and the overall footprint area greater than 75%.
This is evaluated by means of an adhesive film for detecting the footprint area, and subsequently by marking the pitches comprised within the footprint, detecting and measuring the surfaces which contacted the adhesive film (solid rubber area), detecting and measuring the overall footprint.

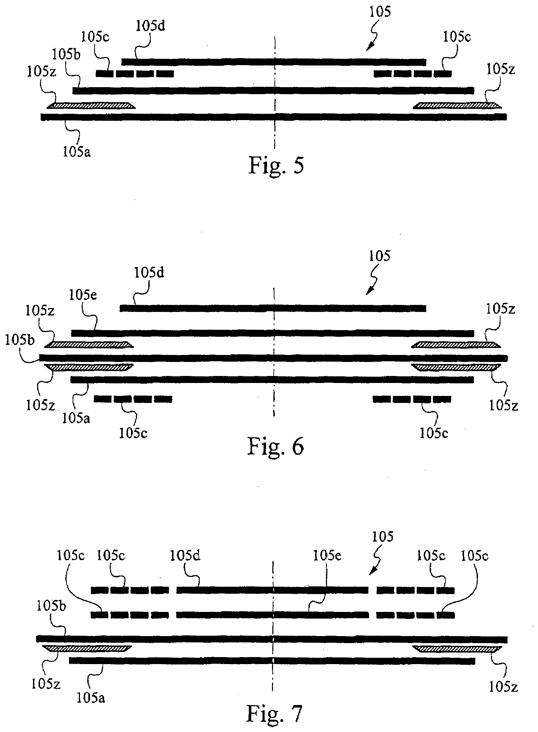

Referring to Figure 5, the belt structure 105 of a steer axle tyre for heavy load vehicles is shown.

The belt structure comprises two main belt layers 105a and 105b which are radially superimposed and incorporate a plurality of belt reinforcing elements (not shown in Figure 5), typically metal cords, preferably made of steel. Figure 5 shows a radially inner layer 105a which is wider than a radially outer layer 105b, however it is also possible for the radially outer layer 105b to be wider than the radially inner layer 105a.

The reinforcing elements of the belt layer are substantially parallel to one another in each belt layer and have a crossed orientation with respect to the reinforcing elements of the adjacent reinforcing layer, and are preferably symmetrically inclined with respect to the circumferential direction of the tyre. Preferably, the inclination angle (in absolute value) with respect to the circumferential direction of the tyre is between 10° and 70°, more preferably between 12° and 40°. The belt reinforcing elements are typically coated with an elastomeric material.

Still referring to Figure 5, the belt structure 105 can comprise a third belt layer 105d, applied as the radially outermost layer of the belt structure 105, having reinforcing elements, typically metal cords, preferably made of steel. The third belt layer 105d advantageously has a protective function against the penetration of foreign bodies which can become trapped in the tread grooves, such as stones, stone chips, etc., towards the innermost layers of the belt structure 105 (or even towards the carcass structure). The reinforcing elements of the third belt layer 105d are arranged substantially parallel to one another and are inclined with respect to a circumferential direction of the tyre by an angle between 10° and 70°, preferably between 12° and 40°. The reinforcing elements of the third belt layer 105d are typically coated with an elastomeric material.

Advantageously, still referring to Figure 5, the belt structure 105 of the tyre also comprises a zero-degree reinforcing layer 105c (or lateral reinforcing layer) applied in a radially outer position with respect to the second main belt layer 105b. Such layer 105c can have substantially the same width as the main belt layers. However, preferably the layer 105c is formed by strips having a limited width, smaller than the width of the main belt layers, and located substantially near the axial ends of the belt structure 105.

In the embodiment shown in Figures 1 and 5, the layer 105c is located near the axial end of the tyre and is applied in a radially outer position with respect to the second main belt layer 105b. Said lateral reinforcing layer 105c typically incorporates a plurality of reinforcing elements, typically metal cords, preferably made of steel. Differently from the other layers of the belt structure, the reinforcing elements of the lateral reinforcing layer 105c are oriented substantially in a circumferential direction, thus forming an angle substantially equal to zero (for example, an angle between about 0° and about 10°) with respect to the equatorial plane X-X of the tyre. Typically, they are metal cords coated with an elastomeric material.

According to an embodiment, the zero-degree reinforcing layer 105c can be formed by winding in a radial superimposed way two or three turns of a rubberized strip having a predetermined width. The rubberized strip according to this variant has a width substantially equal to the width of the layer 105c itself.

According to a different embodiment, the zero-degree reinforcing layer 105c can be formed by means of coils arranged axially in side-by-side relationship of a rubberized cord or of a rubberized strip comprising reinforcing cords and having a width smaller than the overall width of the zero-degree reinforcing layer 105c.

According to a preferred embodiment, the third belt layer 105d can be arranged so as to cover at least partially the zero-degree reinforcing layer 105c in the radial direction. This provides an advantageous and important protection to at least a portion of the zero-degree reinforcing layer 105c.

Preferably, the third belt layer 105d covers the zero-degree reinforcing layer 105c over at least half its width. In an embodiment, the third belt layer 105d covers substantially entirely the zero-degree reinforcing layer 105c (for example at least 80% of the zero-degree reinforcing layer). This has at least two important advantages. Firstly, the zero-degree reinforcing layer 105c is much less subjected to damages caused by stones, stone chips or other foreign bodies which could penetrate from the tread radially towards the inside of the tyre and could let an oxidizing agent (for example water and humidity) penetrate towards the reinforcing elements of the zero-degree reinforcing layer 105c. This preserves the integrity of the zero-degree reinforcing layer 105c and strongly reduces the likelihood that the tyre is rejected at the time of a retreading because of corroded reinforcing elements. Secondly, the retreading of the tyre can be performed more easily and safely. In fact, it is possible to remove the tread without the risk of tearing and unwinding the zero-degree reinforcing layer 105c.

Additionally or alternatively to the zero-degree reinforcing layer 105c applied in a radial outer position with respect to the second main belt layer 105b, a zero-degree reinforcing layer (for example a strip located in an axially outer position with respect to the belt structure, or a layer having substantially the same width as the main belt layers) can be provided between the main belts 105a, 105b, and/or a zero-degree reinforcing layer (for example a strip located in an axially outer position with respect to the belt structure, or a layer having substantially the same width as the main belt layers) can be provided between the carcass structure 101 of the tyre and the radially innermost main belt 105a. An example of a belt structure of this kind is hereinafter described.

Also in this case, the above-described zero-degree reinforcing layers located between the main belts and/or between the carcass and the radially innermost main belt can be formed by means of coils arranged axially in side-by-side relationship of a rubberized cord or of a rubberized strip comprising reinforcing cords. As to the reinforcing elements of these layers reference can be made to the description made above of the high elongation cords preferably included in the zero-degree reinforcing layer 105c.

Referring to Figure 5, besides the layers 105a, 105b, 105c and 105d, separators 105z made of rubber can be seen which are interposed at ends of the layers for preventing crack initiations caused by stress concentrations.

Figure 6 is a schematic view of the tyre belt structure suitable for tyres with large chords (for example chords greater than or equal to 365), or "wide base" tyres. Such tyres can be for example employed on trailers of tractor-trailers, in place of pairs of narrower tyres, or even on the front axle of the tractor. Also for these tyres it is of the greatest importance to have excellent features of integrity and stress resistance.

Similarly to the first embodiment, the belt structure 105 comprises a first main belt layer 105a and a second main belt layer 105b in a radial outer position with respect to the first main belt layer 105a. The features of the layers 105a and 105b and of the reinforcing cords included therein are the same as in the first embodiment and thus a detailed description thereof will not be repeated. Preferably, the second main belt layer 105b extends axially beyond the end of the first main belt layer 105a.

The belt structure 105 can also comprise a third belt layer 105d applied as the radially outermost layer of the belt structure 105. The features of the layer 105d and of the reinforcing cords included therein are the same as in the first embodiment and thus a detailed description thereof will not be repeated.

In a radially outer position with respect to the second main belt layer 105b a further main belt layer 105e can be provided. The further main belt layer 105e preferably has features similar to those of the main belt layers 105a and 105b.

Advantageously, the belt structure 105 of the tyre of the second embodiment also comprises a zero-degree reinforcing layer 105c applied in a radially inner position with respect to the first main belt layer 105a. Such layer 105c can have substantially the same width as the main belt layers. Preferably, however, such layer 105c is formed by strips of limited width located substantially near the axial ends of the belt structure 105. Leaving out the different location, the zero-degree reinforcing layer 105c of this embodiment has features similar to those of the zero-degree reinforcing layer 105c described with reference to Figures 1 and 5. Advantageously, separators 105z made of rubber, interposed at ends of the layers, can be provided for preventing crack initiations caused by stress concentrations.

In Figure 7 the belt structure of a tyre with large chords, or "wide base" tyre, particularly for trailer wheels, is schematically represented. A first main belt 105a, a second main belt 105b, in a radially outer position with respect to the first main belt 105a and extending beyond the first main belt 105a in an axial direction, a third main belt 105e, in a radially outer position with respect to the second main belt 105b and terminating before the second main belt 105b in an axial direction, and a further belt layer 105d, in a radially outer position with respect to the third main belt 105e, are shown. In the belt structure of the tyre there is a double zero-degree layer 105c.

Referring to Figure 7, besides the layers 105a, 105b, 105c, 105d and 105e, separators 105z made of rubber can be seen which are interposed at the ends of the layers for preventing crack initiations caused by stress concentrations.

In the following some results, obtained by the Applicant, of simulations on tyre models and of tests performed with tyres made according to the present invention, compared with reference tyres, will be presented.

### EXAMPLES

### Example 1 - Test on tyres - rolling resistance

Rolling resistance tests were performed. The Applicant measured the rolling resistance of two tyres respectively (RIF) and (INV) with a test according to ISO 28580:2009 standard.

Two tyres 385/65 R 22.5 were made with four circumferential grooves symmetrically located with respect to the equatorial plane.

In both tyres, the two first (axially outer) grooves, equal to each other, were formed with a geometry having inclined walls diverging towards the tread surface, curved bottom, maximum axial width at the outer edge of the groove equal to 11.5 mm and depth equal to 13,5 mm.

In the tyre according to the invention (INV) two second (axially inner) grooves were formed with the geometry shown in Figure 3a, having a maximum width Wmax of the radially outer portion coinciding with the width Ws of the groove edge and equal to 3,2 mm, depth of the radially outer portion equal to 3,7 mm, width of the cross section of the radially inner portion equal to 1.1 mm, groove depth D equal to 13,4 mm, area of the groove cross section A equal to 18 mm² and numerical ratio A/D equal to 1,3 with a radially inner portion.

The reference tyre (RIF) was made with two second (axially inner) grooves formed equal to each other and with a geometry having inclined walls diverging towards the tread surface and curved bottom. The maximum width at the outer edge of the groove was equal to 12.04 mm, the depth D to 12 mm, the area A of the cross-section to 120,9 mm² and the ratio A/D to 10,1.

Assuming the rolling resistance of the reference tyre (RIF) equal to 100, the rolling resistance measured for the tyre according to the invention (INV) was 92, with and advantageous reduction of 8%.

The present invention has been described with reference to some embodiments thereof. Many modifications can be made in the embodiments described in detail, still remaining within the scope of protection of the invention, defined by the following claims.

## Claims

1. Tyre (100) for heavy load vehicle wheels having a tread (106) comprising a central annular portion (L1) astride an equatorial plane (X-X) and two shoulder annular portions (L2), located on axially opposite sides with respect to the central annular portion (L1), said central annular portion being separated from each shoulder annular portion by a respective first circumferential groove (201), said central annular portion (L1) comprising at least one second circumferential groove (202), at least one of the first and the second circumferential grooves (201, 202) has a radial depth D not smaller than 8 mm and a cross section A expressed in mm², wherein defining A₁ the cross section of a radially outer portion of a circumferential groove extending over a depth D₁ equal to 50% of the radial depth D, said at least one second circumferential groove (202) is formed so that A₁ > 0,5A and that A/D has a numerical value between 0,5 and 3, **characterized in that** said at least one second circumferential groove has a radially innermost portion with substantially parallel walls joined to a radially outermost portion with walls diverging in the radial direction towards the tread surface so as to have a Y-shaped geometry.

2. Tyre (100) according to claim 1, wherein said at least one second circumferential groove (202) has a ratio A/D having a numerical value between 0,6 and 3.

3. Tyre (100) according to claim 1 or 2, wherein the extension in the radial direction of said radially innermost portion is greater than the extension in the radial direction of said radially outermost portion.

4. Tyre (100) according to any one of the previous claims, wherein said at least one second circumferential groove (202) is formed so that A₁ ≥ 0,6A.

5. Tyre (100) according to any one of the previous claims, wherein, defining Wmax the maximum width of the radially outermost portion of said at least one of the first and the second circumferential grooves (201, 202) and Ws the width of the groove edge at the tread surface, Ws is not smaller than 80% of Wmax.

6. Tyre (100) according to claim 5, wherein the radially outermost portion of said at least second circumferential grooves (202) is tapered so as to have a width reduction in the radial direction towards the inside of the tread with Ws = Wmax.

7. Tyre (100) according to any one of the previous claims, wherein said at least one of the first and the second circumferential grooves (201, 202) has, in the radially inner portion near the groove bottom, a cross section having a width greater than or equal to 0,5 mm.

8. Tyre (100) according to any one of the previous claims, wherein said at least one of the first and the second circumferential grooves (201, 202) has, in the radially inner portion near the groove bottom, a cross section having a width smaller than 8 mm.

9. Tyre (100) according to any one of the previous claims, wherein said at least one of the first and the second circumferential grooves (201, 202) has a depth D smaller than 25 mm.

10. Tyre (100) according to any one of the previous claims, wherein said central annular portion (L1) has a pair of second circumferential grooves (202) formed on opposite sides with respect to the equatorial plane (X-X).

11. Tyre (100) according to claim 1, wherein said first circumferential grooves (201) are tapered in the radial direction towards the inside.

12. Tyre (100) according to claim 1, wherein said first circumferential grooves (201) have a maximum width corresponding to the width of the groove edge at the tread surface of at least 3 mm.

## Patentansprüche

1. Reifen (100) für Räder von Schwerlastfahrzeugen mit einer Lauffläche (106) umfassend einen zentralen ringförmigen Abschnitt (L1) zu beiden Seiten einer Äquatorialebene (X-X) und zwei ringförmige Schulterabschnitte (L2), die auf axial entgegengesetzten Seiten in Bezug auf den zentralen ringförmigen Abschnitt (L1) angeordnet sind, wobei der zentrale ringförmige Abschnitt von jedem ringförmigen Schulterabschnitt durch eine jeweilige erste umlaufende Nut (201) getrennt ist, wobei der zentrale ringförmige Abschnitt (L1) zumindest eine zweite umlaufende Nut (202) umfasst, wobei zumindest eine der ersten und zweiten umlaufenden Nuten (201, 202) eine radiale Tiefe D von nicht weniger als 8 mm und einen Querschnitt A ausgedrückt in mm² aufweist, wobei, wenn A₁ als Querschnitt eines radial äußeren Abschnitts einer umlaufenden Nut definiert ist, der/die sich über eine Tiefe D₁ gleich 50 % der radialen Tiefe D erstreckt, zumindest eine zweite umlaufende Nut (202) ausgebildet ist, so dass A₁ > 0,5A und A/D einen numerischen Wert zwischen etwa 0,5 und 3 aufweist, **dadurch gekennzeichnet, dass** die eine zweite umlaufende Nut einen radial innersten Abschnitt mit im Wesentlichen parallelen Wänden aufweist, die mit einem radial äußersten Abschnitt vereinigt sind, mit Wänden, die in der radialen Richtung zu der Lauffläche hin auseinanderlaufen, um eine Y-förmige Geometrie aufzuweisen.

2. Reifen (100) nach Anspruch 1, wobei die zumindest eine zweite umlaufende Nut (202) ein Verhältnis A/D mit einem numerischen Wert zwischen 0,6 und 3 aufweist.

3. Reifen (100) nach Anspruch 1 oder 2, wobei die Erstreckung in der radialen Richtung des radial innersten Abschnitts größer als die Erstreckung in der radialen Richtung des radial äußersten Abschnitts ist.

4. Reifen (100) nach einem der vorhergehenden Ansprüche, wobei die zumindest eine zweite umlaufende Nut (202) so ausgebildet ist, dass A₁ ≥ 0,6A.

5. Reifen (100) nach einem der vorhergehenden Ansprüche, wobei, wenn Wmax die maximale Breite des radial äußersten Abschnitts der zumindest einen der ersten und der zweiten umlaufenden Nuten (201, 202) und Ws die Breite des Nutrandes an der Lauffläche definiert, Ws nicht weniger als 80 % von Wmax beträgt.

6. Reifen (100) nach Anspruch 5, wobei der radial äußerste Abschnitt der zumindest zweiten umlaufenden Nuten (202) sich so verjüngt, dass er eine Breitenverringerung in der radialen Richtung zur Innenseite der Lauffläche mit Ws = Wmax aufweist.

7. Reifen (100) nach einem der vorhergehenden Ansprüche, wobei die zumindest eine der ersten und der zweiten umlaufenden Nuten (201, 202) in dem radial inneren Abschnitt nahe dem Nutgrund einen Querschnitt mit einer Breite größer als oder gleich 0,5 mm aufweist.

8. Reifen (100) nach einem der vorhergehenden Ansprüche, wobei die zumindest eine der ersten und der zweiten umlaufenden Nuten (201, 202) in dem radial inneren Abschnitt nahe dem Nutgrund einen Querschnitt mit einer Breite kleiner als 8 mm aufweist.

9. Reifen (100) nach einem der vorhergehenden Ansprüche, wobei die zumindest eine der ersten und der zweiten umlaufenden Nuten (201, 202) eine Tiefe D von weniger als 25 mm aufweist.

10. Reifen (100) nach einem der vorhergehenden Ansprüche, wobei der zentrale ringförmige Abschnitt (L1) ein Paar von zweiten umlaufenden Nuten (202) auf entgegengesetzten Seiten in Bezug auf die Äquatorialebene (X-X) aufweist.

11. Reifen (100) nach Anspruch 1, wobei die ersten umlaufenden Nuten (201) sich in der radialen Richtung zur Innenseite hin verjüngen.

12. Reifen (100) nach Anspruch 1, wobei die ersten umlaufenden Nuten (201) eine maximale Breite entsprechend dem Nutrand an der Lauffläche von zumindest 3 mm aufweisen.

## Revendications

1. Pneu (100) pour roues de véhicule poids lourd ayant une bande de roulement (106) comprenant une partie annulaire centrale (L1) à cheval sur un plan équatorial (X-X) et deux parties annulaires d'épaulement (L2), situées sur des côtés axialement opposés par rapport à la partie annulaire centrale (L1), ladite partie annulaire centrale étant séparée de chaque partie annulaire d'épaulement par une première rainure circonférentielle respective (201), ladite partie annulaire centrale (L1) comprenant au moins une deuxième rainure circonférentielle (202), au moins l'une des premières et deuxièmes rainures circonférentielles (201, 202) a une profondeur radiale D supérieure ou égale à 8 mm et une section transversale A exprimée en mm², où en définissant A₁ comme étant la section transversale d'une partie radialement extérieure d'une rainure circonférentielle s'étendant sur une profondeur D₁ égale à 50% de la profondeur radiale D, ladite au moins une deuxième rainure circonférentielle (202) est formée de sorte que A₁ > 0,5A et que A/D ait une valeur numérique comprise entre 0,5 et 3, **caractérisé en ce que** ladite au moins une deuxième rainure circonférentielle a la partie radialement la plus à l'intérieur avec des parois essentiellement parallèles reliées à la partie radialement la plus à l'extérieur avec des parois divergentes dans la direction radiale vers la surface de bande de roulement de manière à avoir une géométrie en forme de Y.

2. Pneu (100) selon la revendication 1, dans lequel ladite au moins une deuxième rainure circonférentielle (202) a un rapport A/D ayant une valeur numérique comprise entre 0,6 et 3.

3. Pneu (100) selon la revendication 1 ou 2, dans lequel l'extension dans la direction radiale de ladite partie radialement la plus à l'intérieur est supérieure à l'extension dans la direction radiale de ladite partie radialement la plus à l'extérieur.

4. Pneu (100) selon l'une quelconque des revendications précédentes, dans lequel ladite au moins une deuxième rainure circonférentielle (202) est formée de sorte que A₁ ≥ 0,6A.

5. Pneu (100) selon l'une quelconque des revendications précédentes, dans lequel, en définissant Wmax comme étant la largeur maximale de la partie radialement la plus à l'extérieur de ladite au moins une rainure des premières et deuxièmes rainures circonférentielles (201, 202) et Ws comme étant la largeur du bord de rainure au niveau de la surface de bande de roulement, Ws est supérieure ou égale à 80% de Wmax.

6. Pneu (100) selon la revendication 5, dans lequel la partie radialement la plus à l'extérieur desdites au moins deuxièmes rainures circonférentielles (202) est effilée de manière à avoir une réduction de largeur dans la direction radiale vers l'intérieur de la bande de roulement avec Ws = Wmax.

7. Pneu (100) selon l'une quelconque des revendications précédentes, dans lequel ladite au moins une rainure des premières et deuxièmes rainures circonférentielles (201, 202) a, dans la partie radialement intérieure à proximité du fond de rainure, une section transversale ayant une largeur supérieure ou égale à 0,5 mm.

8. Pneu (100) selon l'une quelconque des revendications précédentes, dans lequel ladite au moins une rainure des premières et deuxièmes rainures circonférentielles (201, 202) a, dans la partie radialement intérieure à proximité du fond de rainure, une section transversale ayant une largeur inférieure à 8 mm.

9. Pneu (100) selon l'une quelconque des revendications précédentes, dans lequel ladite au moins une rainure des premières et deuxièmes rainures circonférentielles (201, 202) a une profondeur D inférieure à 25 mm.

10. Pneu (100) selon l'une quelconque des revendications précédentes, dans lequel ladite partie annulaire centrale (L1) a une paire de deuxièmes rainures circonférentielles (202) formées sur des côtés opposés par rapport au plan équatorial (X-X).

11. Pneu (100) selon la revendication 1, dans lequel lesdites premières rainures circonférentielles (201) sont effilées dans la direction radiale vers l'intérieur.

12. Pneu (100) selon la revendication 1, dans lequel lesdites premières rainures circonférentielles (201) ont une largeur maximale correspondant à la largeur du bord de rainure au niveau de la surface de bande de roulement d'au moins 3 mm.
